# EUROPEAN PATENT SPECIFICATION

(11) **EP 1 864 248 B1**
(45) Date of publication and mention of the grant of the patent: **28.08.2013**
(21) Application number: 06732741.1
(22) Date of filing: 30.03.2006
(51) Int. Cl.: G06K 17/00, G06K 19/073, G07G 1/00, G07F 7/10

(54) **RF-ID TAG READING SYSTEM FOR USING PASSWORD AND METHOD THEREOF**
RF-ID-ETIKETTENLESESYSTEM ZUR VERWENDUNG VON PASSWÖRTERN UND VERFAHREN DAFÜR
SYSTEME D'ETIQUETTE D'IDENTIFICATION PAR RADIOFREQUENCE POUR L'UTILISATION DE MOT DE PASSE ET PROCEDE CORRESPONDANT

(30) Priority: 30.03.2005 KR 20050026584; 30.03.2006 KR 20060028685
(43) Date of publication of application: 12.12.2007
(73) Proprietor: Samsung Electronics Co., Ltd., Suwon-si, Gyeonggi-do, 443-742 (KR)
(72) Inventor: PARK, Kyung-ho, Suwon-si, Gyeonggi-do (KR); KANG, Woo-shik, Yeongtong, Suwon-si, Gyeonggi-do 433-780 (KR); YANG, Jin-young, Gwangjin-gu, Seoul 143-753 (KR); YOON, Hyung-min, Seoul 135-928 (KR)
(74) Representative: Ertl, Nicholas Justin
(86) International application number: PCT/KR2006/001165
(87) International publication number: WO 2006/104354

(56) References cited:
- JP-A- 2003 337 928
- US-A- 5 469 363
- US-A- 5 896 325
- US-B1- 6 172 596

## Description

### Technical Field

The general inventive concept relates to an RFID tag reading system including an RFID tag and an RFID reader, and a method thereof, more specifically, to an RFID tag reading system including an RFID tag and an RFID reader, which has a security function of determining whether or not to read tag data using a password, and a method thereof.

### Background Art

Today, due to developed wireless technologies, diverse RFID tag reading systems ranging from a prepayment bust card to a parking lot pass and a laboratory pass are used. The RFID tag reading system includes a tag and a reader. The RFID tag reading system operates in the method that if the reader requests tag data transmission to the tag; the tag transmits tag data to the reader in the form of a radio frequency. The reader can be formed in terminals such as a cell phone, a PDA, and a laptop computer. The tag can be implemented in the form of a card which a user can carry such as a pass, and a bus card, or can be implemented in the form of a sticker which is attached to a product to transmit product information.

Meanwhile, according to the method of driving an IC embedded in the tag, there are two types of RFID systems. An active tag supplies power from a battery embedded in the tag, and a passive tag generates an induced current using a magnetic wave transmitted from the RFID reader. Passive tags in the form of a slim and light-weight card are generally used. As the passive tag does not need a battery, it can be miniaturized and low-priced. Accordingly, tags attached to a general product is implemented with passive tags.

### Disclosure of Invention

### Technical Problem

According to a coventional RFID system, if a tag receives an electromagnetic from a neighboring reader, the tag outputs a transmission signal containing tag data stored in its memory. Subsequently, a plurality of neighboring readers can receive the tag data. In this case, a reader of an unauthorized user can also receive the tag data. As a result, the security of the tag data stored in the tag is not guaranteed. Particularly, if a user buys and carries a product, another can identify the tag data of the tag attached to the product. Therefore, the privacy of the user having the product can be invaded.

### Technical Solution

US 5 896 325 discloses an IC card having, a memory which communicates data with a reader/writer. Password verification is used. This prior art is acknowledged in the preamble of
the independent claims.
US 6 172 596 discloses a system which uses different types of tag. The base station interrogates the tags using a tag type code.
US 5 469 363 discloses an inventory control system in which items have a tag which has a secret record which is only accessible to a user with a valid password.
An aspect of embodiments of the present invention is to solve at least the above problem or disadvantage and to provide at least the advantages described bellow. Accordingly, an aspect of embodiments of the present invention is to provide an RFID tag reading system including an RFID tag, Which guarantees individual privacy by transmitting tag data only when a preset password is input, and reinforcing security of the tag data, and an RFID reader, and a method thereof.
According to the invention, there is provided an RFID tag as claimed in claim 1, a reader as claimed in claim 8 and a tag reading method as claimed in claim 14.

### Advantageous Effects

As described above, an RFID tag according to the present invention is input with a password, tag data are transmitted to an RFID reader only when the password is the same as a password from the RFID reader. Accordingly, the security is reinforced, and individual privacy can be protected. In addition, in case that somebody tries tag reading, the owner of the tag can instantly notice by an alarm message or an alarm signal that the tag reading is tried. An RFID system according to the present invention can be applied to diverse environments such as a shopping system or a content providing system.

### Brief Description of the Drawings

FIG. 1 is a schematic diagram illustrating the configuration of an RFID tag reading system according to an exemplary embodiment of the present invention;

FIG. 2 is a block diagram illustrating the configuration of an RFID tag according to an exemplary embodiment of the present invention;

FIG. 3 is a block diagram illustrating the configuration of an RFID reader according to an exemplary embodiment of the present invention;

FIG. 4 is a flow chart illustrating an RFID tag reading method according to an exemplary embodiment of the present invention;

FIG. 5 is a flow chart illustrating an RFID tag reading method according to another exemplary embodiment of the present invention;

FIG. 6 is a flow chart illustrating a method of registering a password of an RFID tag according to an exemplary embodiment of the present invention;

FIG. 7 is a schematic diagram illustrating an example of the configuration of the tag memory in the RFID tag of FIG. 2;

FIGS. 8 and 9 are mimetic diagrams illustrating a signal transmission flow between the reader and the tag in the RFID system of FIG. 1;

FIG. 10 is a mimetic diagram illustrating a signal transmission flow to lock or unlock a region to store a password and an operation mode;

FIG. 11 is a block diagram illustrating the configuration of an RFID shopping system using the RFID system of FIG. 1; and

FIG. 12 is a flow chart illustrating a wireless authentication method of the RFID shopping system using the RFID, system of FIG. 1.

*Description of the reference numerals in the drawings*

100: tag 110: antenna part

120: tag controller 130: tag memory

140: transmission signal processor 210: communicator

220: controller 230: input part

240: password register 250: memory

260: display part 200: reader

### Best Mode for Carrying Out the Invention

Hereinafter, exemplary embodiments of the present invenetion will be described in detail with reference to the accompanying drawing fiures.

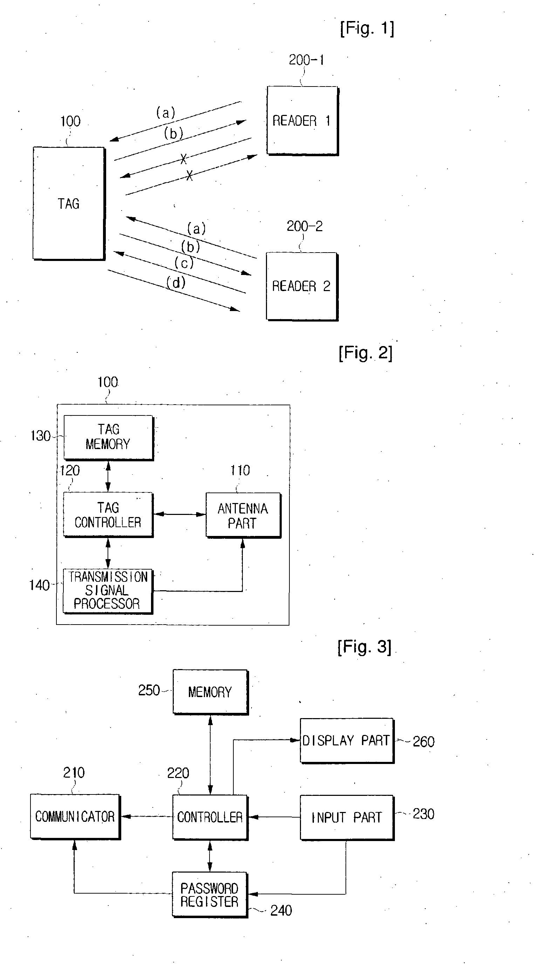

1 FIG. 1 is a schematic diagram illustrating the configuration of an RFID tag reading system according to an exemplary embodiment of the present invention. According to FIG. 1, the RFID tag reading system includes a tag 100 and a plurality of readers 200_1 and 200_2.

The tag 100 contains a memory (not shown). The memory stores tag data and a pre-registered first password. The tag data are diverse information (product information, personal information and a tag ID) on a product (or a tag owner) which the tag 100 is attached to.

If a first reader 200_1 of the plurality of readers transmits a tag data transmission request signal (a), the tag 100 requests a password transmission to the first reader 200_1 (b). The tag data transmission request signal may be a carrier signal containing a message which requests tag data transmission, or a simple electromagnetic wave to generate an induced current from a coil in the tag 100. Meanwhile, in spite of the password transmission request (b), if the first reader 200_1 does not transmit the password to the tag 100, the tag 100 does not transmit the tag data.

Meanwhile, if a second reader 200_2 requests tag data transmission to the tag 100 (a), the tag 100 requests a password transmission to the second reader 200_2 (b). Accordingly, the second reader 200_2 transmits the password to the tag 100 (c), the tag 100 compares the received password and the pre-registered password to confirm whether they matches. As a result, if they matches, the tag 100 tranmits the tag data to the second reader 200_2 (d). Accordingly, only the second reader 200_2 which knows the exact password can confirm the tag data.

The reader in the RFID tag reading system of FIG. 1 may be a portable device having a RFID tag reading function, or a device fixed on a building.

FIG. 2 is a block diagram illustrating the configuration of the tag 100 according to an exemplary embodiment of the present invention. According to FIG. 2, the tag 200 includes an antenna part 110, a tag controller 120, a tag memory 130 and a transmission signal processor 140.

The antenna part 110 receives a signal transmitted from an external reader, or transmits a signal generated in the transmission signal processor 140. The antenna part 110 may be a coil. Accordingly, if an electromagnetic wave is received from the external reader, the antenna part 110 can generate an induced current to supply to the tag controller 120.

The tag memory 130 stores tag data and password information.

If tag data transmission request is received, the tag controller 120 requests password transmission to the reader. More specifically, the tag controller 120 generates a password transmission request signal by controlling the transmission signal processor 140, and transmits the password transmission request signal to the reader through the antenna part 110.

If the password information is transmitted from the reader, the password information is compared with the password information stored in the tag memory 130. If those passwords match, the tag controller 120 controls the transmission signal processor 140 to transmit the tag data to the reader. That is, the transmission signal processor 140 generates a transmission signal by modulating the tag data, and transmits the signal to the reader.

If those passwords do not match, the tag controller 120 controls the transmission signal processor 140 to request password retransmission. As a result, if a password is retransmitted, the password is compared with the pre-registered password to determine whether to transmit a password.

Meanwhile, if those passwords do not match again, the tag controller 120 counts the number of non-matching. If non-matching consecutively occurs a certain number of times or more, the tag controller 120 controls the transmission signal processor 140 to generate an alarm signal. Accordingly, the alarm signal is transmitted to a reader of an authenticated user so that the authenticated user can notice that an unauthenticated user tries reading. In this case, the tag controller 120 can control the transmission signal processor 140 to transmit the alarm signal informing the reader trying reading of nonauthority.

Alternatively, the tag 100 may further include an output part (not shown). In this case, if the passwords do not match a certain number of times or more, the tag controller 120 controls the output part to output an alarm message to inform tag data transmission to be impossible. The output part may be a red LED or a speaker. The alarm message is expressed by flickering the LED or ringing the alarm.

Meanwhile, the tag controller 120 can change the operation mode according to the user's selection. The operation mode of the tag controller 120 can be set to one of a general operation mode and a secure operation mode. If the secure operation mode is selected, whether to transmit the tag data is determined using the password as described above. If the general operation mode is selected, the tag data are directly transmitted without requesting the password. Such operation modes can be set by user's inputting a mode selection command using a reader. The information on the operation mode and the password information respectively can be recorded in a certain area of the tag memory 130 and utilized. In this case, the memory area where the information on the operation mode and the password information are recorded is locked, so that an unauthorized user cannot change the information on the operation mode and the password information. Such configuration of the tag memory 130 will be described soon.

FIG. 3 is a block diagram illustrating the configuration of a portable device 200 having an RFID tag reading function according to an exemplary embodiment of the present invention. According to FIG. 3, the portable device 200 includes a commumicator 210, a controller 220, an input part 230, a password register 240, a memory 250, and a display part 260. The portable device 200 is a reader applied to a variety of portable electronic devices such as a cell phone, a PDA, and a laptop computer.

The communicator 210 receives a signal transmitted from an RFID tag, or transmis a signal. To this end, the communicator 210 can be implemented with an antenna or modulation and demodulation circuit.

The input part 230 receives a command from a user. The user can input various commands by pressing buttons formed on a main body of the portable device or inputting a voice signal. More specifically, a reading command of the RFID tag, a mode setting command, and a password registration command can be input to the input part 230. Accordingly, if the reading command is input, the input part 230 notifies it to the controller 220.

If the reading command is input from the input part 230, the controller 220 controls the commumicator 210 to transmit a tag data transmission request signal to the tag. As described above, if the tag is set in the secure operation mode, the tag requests a password.

Accordingly, if the password request signal is received, the controller 220 transmits the password information to the tag. The password information may be a password input by a user, or a preset password. More specifically, the preset password may be a cell phone number (if the portable device is a cell phone), a serial number of the portable device, or a residential number of the user.

Meanwhile, if the password information is a password input by the user, the controller 220 receives the password request signal, and controls the display part 260 to display a window to input a password. The display part 260 may be a display element such as an LCD. Therefore, if the user input a password through the input part 230, the input password is transmitted to the tag. Consequently, if those passwords match and the tag data are transmitted to the reader, the controller 220 controls the display part 260 to display the tag data.

Meanwhile, in order to set the tag in the secure operation mode, a password has to be previously registered. The password register 240 registers a password for a tag. To this end, the memory 250 stores information on a tag to register its password.

If a password registration command for a tag is input to the controller 220 through the input part 230, the controller 220 controls the display part 260 to display a list of tag information stored in the memory 250. If a first tag is selected from the list, the display part 260 displays a password input window to input a password. Subsequently, a first password is input through the password input window, the password register 240 generates a password registration request signal to transmit to the first tag. The password registration request signal contains information on the first password to register the first password to the first tag.

Alternatively, if a password registration command for a tag is input to the controller 220, the password register 240 directly receives a password without designating a tag. If the password is input, a password registration request signal containing the password are transmitted in the neighborhood. Accordingly, a password for neighboring tags is registered all at once.

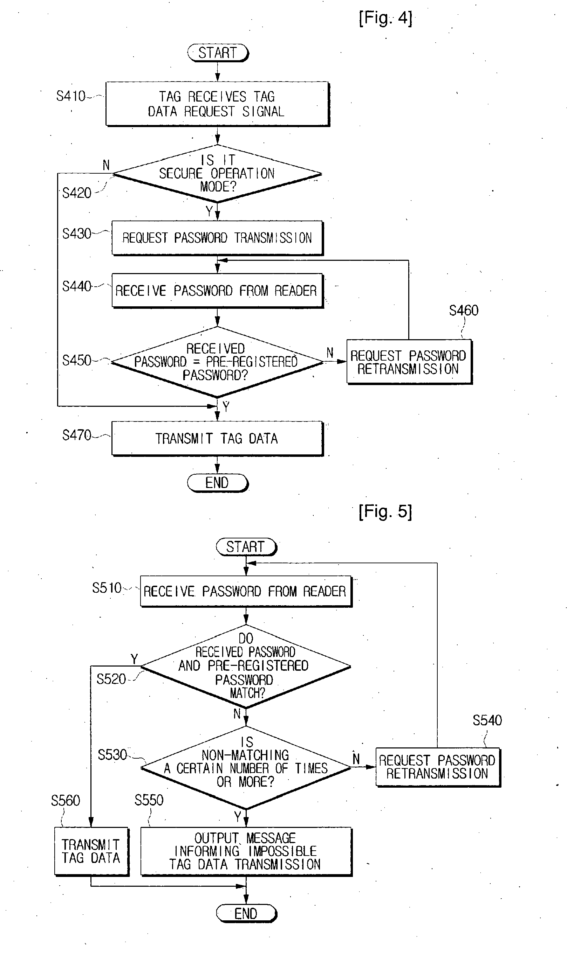

FIG. 4 is a flow chart illustrating an RFID tag reading method according to an exemplary embodiment of the present invention. According to FIG. 4, if a tag receives a tag data transmission request signal (S410), the tag determines whether to be a secure operation mode (S420). If the present mode is the secure operation mode, the tag requests password transmission to the reader which transmitted the tag data transmission request signal (S430). If the tag receives a password from the reader (S440), the tag determines if the received password and a preset password match (S450). If they do not match, the tag requests password retransmission to the reader (S460). On the other hand, if they match, the tag transmits the tag data to the reader . (S470).

FIG. 5 is a flow chart illustrating an RFID tag reading method according to another exemplary embodiment of the present invention. According to FIG. 5, the tag receives a password from the reader (S510), and compares the password and the preset password (S520). If they match, the tag transmits the tag data to the reader (S560). On the other hand, if they do not match, the tag counts the number of non-matching (S530). As a result, if the number of non-matching is less than a certain number of times, the tag requests password retransmission (S540). On the other hand, if the number of non-matching is a certain number of times or more, the tag outputs an alarm message notifying impossible tag data transmission. The alarm message can be expressed by flickering the LED or ringing the alarm, as described above. In addition, if there is a reader of an authenticated user-around the tag, the reader can output an alarm signal informing the tag data reading try. Alternatively, the tag can recognize non-authendication by outputting an alarm message to the reader which tries tag data reading.

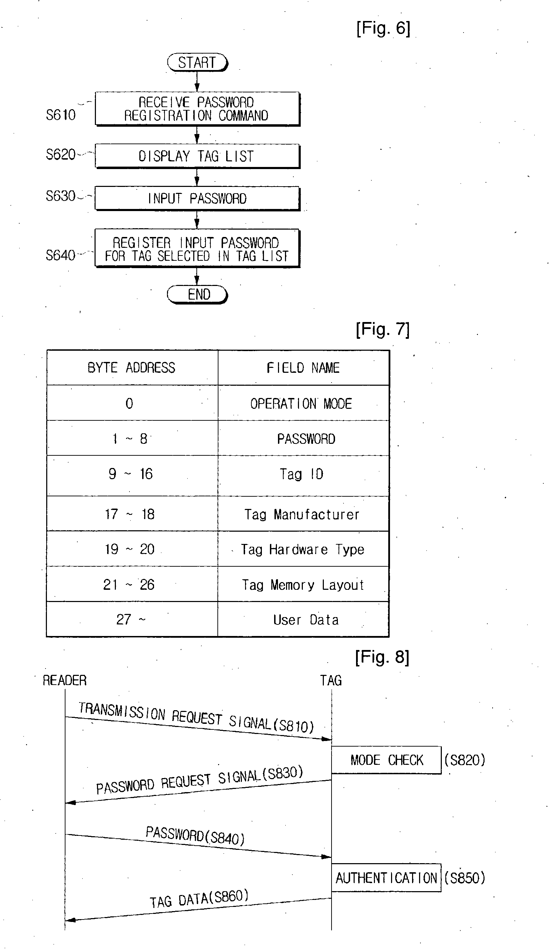

FIG. 6 is a glow chart illustrating a method of registering a password of an RFID tag according to an exemplary embodiment of the present invention. According to FIG. 6, if a password registration command is input to a reader (S610), the reader executes an application program to register a password. The reader may be a portable device having a RFID tag reading function, or a device fixed on a building.

Accordingly, the reader displayes a list of tags to register a password (S620). The user can select a tag to register a password from the list. After a tag is selected, if a password to register is input by the user (S630), input password information is transmitted and registered to the corresponding tag (S640). Accordingly, if an owner of a reader purchases a product attached with a tag; the onwer can register a password by designating the tag of the product.

Meanwhile, according to another example of registering a password, if a password registration command is input and an application program to register a password is executed, a password input window can be directly displayed. Accordingly, if a password is input, a password registration request signal containing the input password is transmitted to the neighborhood. Neighboring tags which receives the password registration request signal registers the received password to its memory. Consequently, the owner of the reader can register the password to the plurality of tags which belongs to the owner at once. As a result, this prevents others from noticing the information on the products phurchased by the owner.

FIG. 7 is a schematic diagram illustrating an example of the configuration of the tag memory in the tag 100 of FIG. 2.

According to FIG. 7, the first field consists of one byte (0th byte), and stores operation mode information. More specifically, the secure operation mode can be recorded as 0x01, and the general operation mode can be recorded as 0x00. The tag controller 120 determines the operation mode by confirming data of the first field. The second field consists of 8 bytes (1th~8th bytes), and stores password information.

The configuration of the memory of the existing tag can be applided to the third field and so on. According to FIG. 7, a tag ID, a tag fabricater, a tag hardware type, a tag memory layout, and user data are stored. FIG. 7 exemplifies the configuration of a memory of an ISO 18000-6 Type C tag, but memories of other standards can be applied. Additionally, in FIG. 7, the operation mode information and password information respectively are recorded in the first and second field, but can be also recorded in the last two fields or center fields of the memory.

Meanwhile, the tag controller 120 can lock the area where the password information and operation mode information are stored in the tag memory 130. In this case, other people cannot change the password information and operation mode information. Using such feature, this RFID system can be utilized in various environments such as a shopping mall and a pay content providing system. The detailed description on this will be made soon.

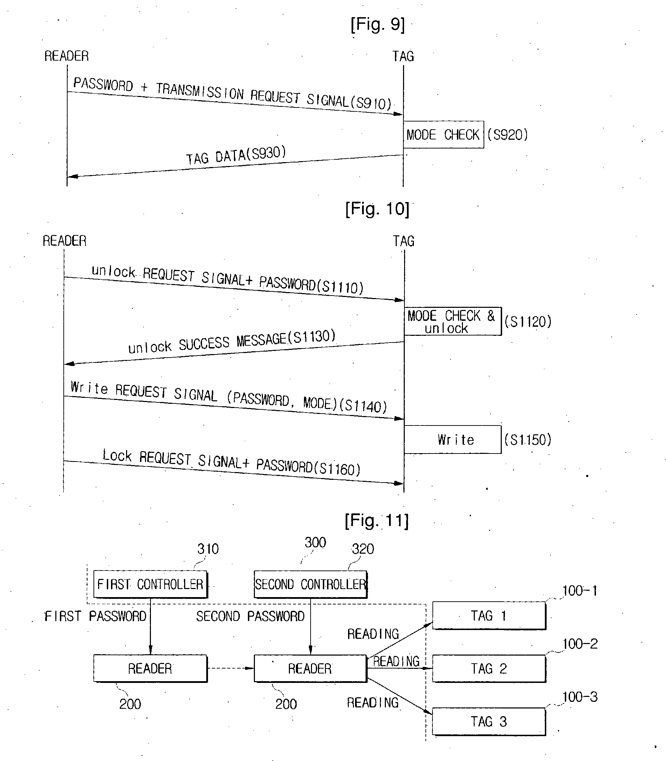

FIGS. 8 and 9 are mimetic diagrams illustrating a signal transmission flow between the reader 200 and the tag 100 in the RFID system according to an exemplary embodiment of the present invention. According to FIG. 8, the reader outputs a transmission request signal (S810). The tag 100 determines the present operation mode in response to the transmission request signal (S820). If the present operation mode is the general operation mode, the tag 100 directly transmits tag data to the reader 200. On the other hand, if the present operation mode is the secure operation mode, the tag 100 transmits a password request signal to the reader 200 (S830). Subsequetly, if the owner of the reader 200 inputs a password or there exists a preset password, the reader 200 transmits the password to the tag 100 (S840). The tag 100 compares the received password and a password stored in the tag to perform authentication (S850). If the authentication is finished, the tag data is transmitted to the reader 200 (S860). However, if the authentication is unsuccessful, a password retransmission signal is transmitted to the reader 200.

FIG. 9 is a mimetic diagram illustrating the case that the reader 200 outputs a transmission request signal containing a password. If the transmission request signal containing a password is transmitted (S910), the tag 100 determines the present operation mode (S920). Accordingly, if the present operation mode is the general operation mode, the tag 100 directly transmits tag data to the reader 200. On the other hand, if the present operation mode is the secure operation mode, the tag 100 detects the password from the transmission request signal, and compares the password and a password stored in the tag 100 to perform authentication. If the authentication is finished, the tag data is transmitted to the reader 200 (S930). However, if the authentication is unsuccessful, the tag 100 requests password retransmission or transmits an alarm message informing the unsuccesful authentication result to the reader 200.

FIG. 10 is a mimetic diagram illustrating the lock or unlock operation between the reader 200 and the tag 100. According to FIG. 10, the reader 200 transmits a unlock request signal containing a password to the tag 100 (S 110). After the tag 100 determines the present operation mode (S1120), if the present operation mode is the general operation mode, the tag 100 directly outputs a successful unlock message (S 1130). On the other hand, if the present operation mode is the secure operation mode, the tag 100 perform authentication using the received password, unlocks the corresponding-memory area after finishing the authentication, and outputs a successful unlock message (S1130). At this time, if the authentication is unsuccessful, the tag 100 can request password retransmission to the reader 200.

Meanwhile, if it is in the unlocked state, the reader 200 can change the operation mode and the password of the tag 100. To change these information, the reader 200 transmits a write request signal containing new information on the password or the operation mode to the tag 100 (S 1140). The tag 100 changes information on the password or the operation mode stored in a certain area of the memory using the information included in the write request signal. If the information change is finished, the reader 200 transmits a lock request signal containing the new password to the tag (S 1160) in order to lock the corresponding area. Accordingly, other people cannot change the password and operation mode information.

The above exemplary embodiments can be utilized in various environments such as a shopping mall and a pay content providing system. Hereinafter, the examples utilizing the RFID system according to the general inventive concep of the present invention will be described in detail.

FIG. 11 is a block diagram illustrating the configuration of an RFID shopping system using the RFID system. The shopping system 300 of FIG. 11 can be applied to a department store or a big shopping mall. The shopping system 300 includes a first controller 310, tags 100_1 through 100_3, and a second controller 320. The configuration of each of the tags 100_1 through 100_3 may follow the configuration of the tag in FIG. 2. Meanwhile, a fabricator of each of the tags 100_1 through 100_3 sets the area storing a password and an operation mode of each of the tags 100_1 through 100_3 as an unlock state and provides the tags to a manager of the shopping system 300. The manager attaches each of the tags 100_1 through 100_3 to each product, and sets the area storing the password and operation mode in the lock state. Each tag stores its product information as tag data. Therefore, users outside of the building utilizing this shopping system 300 cannot read the features of each product.

In this state, a first controller 310 is installed at the front door of the building, and automatically gives a first password to readers 200 (or a cell phone, a portable reader) which enters via the front door. The application program installed in the reader 200 stores the first password transmitted from the first controller 310 in the memory (not shown) of the reader 200. In this case, perferably, it is impossible to change the tag information in a person's disposition by giving a tag data reading right for the first password.

In this state, if the owner of the reader 200 inputs a command to read the tags 100_1 through 100_3, the reader 200 transmits the first password and the transmission request signal to each of the tags 100_1 through 100_3. Accordingly, each of the tags 100_1 through 100_3 performs authentication using the received first password, and provides the tag informaton to the reader 200.

In this state, after the owner of the reader 200 purchases a product attached with a tag (for example, 100_1), the second controller 320 transmits a second password to the reader 200. The second password is a password with a right which can unlock the locked area of the memory of the tag 100_1 and change data. Accordingly, the owner of the reader 200, who purchased products, can change the password in order for other people not to read the information on the purchased products. Additionally, the owner can change the present operation mode to the general operation mode in order for other people to read the information.

Meanwhile, the shopping system 300 can maintain each of the tags 100_1 through 100_3 in the unlock state, notify a certain password to the owner of the reader 200 when the phurchase is confirmed, and set tag 100_1 in the lock state. In this case, the password notified to the owner of the reader 200 ha s a changing right as well as a reading right.

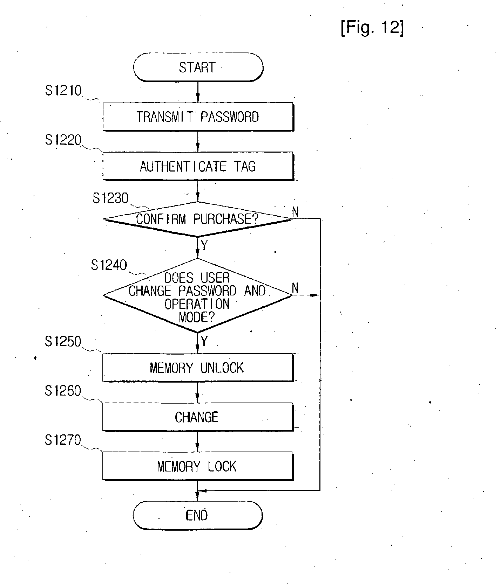

Alternatively, in the shopping system 300, a purchaser can cancel the lock state of the tag 100_1 when the phurchase is confirmed, input a new password to the tag, and then set the lock state again. In this exemplary embodiment, the second controller 320 of FIG. 11 can lock or unlock each of the tags 100_1 through 100_3, and store the second password to the tag 100_1. Detailed operation is described with reference to FIG. 12.

FIG. 12 is a flow chart illustrating a wireless authentication method of the RFID shopping system according to an exemplary embodiment of the present invention. According to FIG. 12, a first controller 310 transmits a password to readers 200 within a certain distance from the first controller 310 (S1210).

Subsequently, the reader 200 reads tag data of each of the tags 100_1 through 100_3 using the password (S 1220).

If the owner of the reader 200 decides to purchase a tag 100_1 (S 1230), the owner changes the password and the operation mode information (S1240). More specifically, the second controller 320 cancels the lock state of the tag 100_1 (S1250), and changes the present information to new information (S1260). That is, the new second password requested by the user is stored in the tag 100_1, or the present operation mode is changed to the general operation mode or secure operation mode. After the change is finished, the second controller 320 sets again the memory of the tag 100_1 in the lock state (S1270).

Accordingly, this prevents other people from reading or changing data of the tag 100_1.

Meanwhile, the RFID system according to the general inventive concept of the present invention can be applied to a content providing business. That is, a content provider records tag data to a tag manufactured by a tag manufacturer, sets the operation mode in the secure operation mode, records the password, and distributes the tags. Receives content purchase requests from users via an SMS, an application or a phone call, the content provider allows the user to read the data by transmitting the password to the user. Accordingly, woman-only contents, movies for over age 18, and contents for members can be selectively utilized.

While the invention has been shown and described with reference to certain embodiments thereof, it will be understood by those skilled in the art that various changes in form and details may be made therein without departing from the scope of the invention as defined by the appended claims.

## Claims

1. An RFID tag, comprising:
a tag memory (130) which stores preset password information and tag data;
an antenna part (110) which receives a transmission request signal for the tag data from an external reader (200); and
a tag controller (120),
**characterized in that** the tag is operable in two modes;
a first, general mode in which the tag transmits tag data to the reader if a transmission request signal is received; and
a second, secure mode in which the tag generates a password transmission request to the reader if a transmission request signal is received, and transmits the tag data to the reader if the password transmitted from the reader and the preset password match.

2. The RFID tag of claim 1, further comprising a transmission signal processor (140) which generates a transmission signal to transmit to the reader when in the second, secure mode, wherein the tag controller generates a password request signal (S830) which requests the password transmission if the transmission request signal is received, and controls the transmission signal processor and the antenna part to transmit the password request signal to the reader.

3. The RFID tag of claim 2, wherein the tag controller (120) controls the transmission signal processor and the antenna part to retransmit the password request signal to the reader if the password transmitted from the reader and the preset password do not match.

4. The RFID tag of claim 1, wherein the tag controller (120) generates an alarm signal informing about a reading try for the tag data and controls the transmission signal processor and the antenna part to emit the alarm signal, if the password transmitted from the reader and the preset password do not match a certain number of times

5. The RFID tag of claim 1, further comprising an output part which outputs a message, wherein the tag controller controls the output part to output an alarm message if the password transmitted from the reader and the preset password do not match the certain number of times.

6. The RFID tag of claim 1, wherein the tag controller (120) sets an area of the memory where the preset password information and tag data are stored in a lock state.

7. The RFID tag of claim 6, wherein the tag memory (130) stores a first password information which authenticates a tag data reading right, and a second password information which authenticates the tag data reading right and a lock state setting change right.

8. A reader for reading an RFID tag according to claim 1-7, comprising:
an input part (30) which receives a reading command for a tag;
a communicator (210) which communicates with the tag (100); and
a controller (220) which controls the communicator to transmit a transmission request signal (S810) for tag data stored in the tag, **characterized in that** the reader is operable in two modes;
a first, general mode in which the tag transmits tag data to the reader in response to the transmission request signal (S810); and
a second, secure mode in which the tag requests password transmission (S830) to the reader in response to the transmission request signal (S810), wherein the controller is adapted to transmit the password information (S840) to the tag in response to the request, to enable reading of the tag data from the tag.

9. The reader of claim 8, wherein the controller (220) transmits one of a password input through the input part and a preset password to the tag (100).

10. The reader of claim 8, further comprising a password register (240) which generates a password registration request signal containing information on the password to register, if a password registration command and the password to register are input through the input part.

11. The reader of claim 10, further comprising:
a memory (250) which stores information on at least one tag; and a display part (260) which displays a list of the at least one tag and a password input window, if the password registration command is input, wherein the password register (240) generates the password registration request signal containing a first password information which is input through the password input window, and transmits the password registration request signal to a first tag which is selected from the list.

12. An RFID tag reading system, comprising:
a tag as claimed in any one of claims 1 to 7; and
a reader as claimed in any one of claims 8 to 11.

13. The RFID tag reading system, comprising a tag according to claim 7 and a reader according to claims 8 to 11, wherein the tag requests retransmission of the second password, if the first password and the second password do not match.

14. A tag reading method in an RFID tag reading system comprising a tag and a reader, the method comprising:
a) the reader transmits a tag data request signal (S810) to the tag; **characterized in that**
b) the tag determines its operation mode, and if its operation mode is a general operation mode, the tag transmits the tag data (S860) to the reader, or if its operation mode is a secure operation mode, the tag generates a password transmission request (S830) to the reader;
c) the reader transmits a password (S840) to the tag in response to a password transmission request; and
d) the tag compares a preset password and the password transmitted from the reader, and transmits the tag data (S860) to the reader if the two passwords match.

15. The method of claim 14, wherein if the preset password and the password transmitted from the reader do not match; the tag counts the number of non-matching of the two passwords; and the tag outputs an alarm message informing impossible transmission of the tag data, if the counted number of non-matching is over a certain number of times.

16. The method of claim 14 or 15, further comprising:
the tag generates an alarm signal informing a reading try for the tag data, if the preset password and the password transmitted from the reader do not match; and the tag emits the alarm signal.

17. The method of claim 14 or 15, further comprising:
the reader receives a password to register, if a password registration command is input to the reader; and the reader generates a password registration request signal containing information on the password to register, and registers the password by transmitting the password registration request signal to neighboring tags.

18. The method of claim 17, further comprising:
displaying a list of at least one tag to register a password; and
registering the password by transmitting a password registration request signal containing the password to register to a selected tag, if a tag is selected from the list.

## Patentansprüche

1. RFID-Etikett, das Folgendes umfasst:
einen Etikettenspeicher (130), der voreingestellte Passwortinformationen und Etikettendaten speichert;
einen Antennenteil (110), der ein Sendeanforderungssignal für die Etikettendaten von einem externen Leser (200) empfängt; und
eine Etikettensteuerung (120),
**dadurch gekennzeichnet, dass** das Etikett in zwei Betriebsarten arbeiten kann:
einer ersten, allgemeinen Betriebsart, in der das Etikett Etikettendaten zum Leser sendet, wenn ein Sendeanforderungssignal empfangen wird; und
einer zweiten, sicheren Betriebsart, in der das Etikett eine Passwortsendeanforderung zum Leser erzeugt, wenn ein Sendeanforderungssignal empfangen wird, und die Etikettendaten zum Leser sendet, wenn das vom Leser gesendete Passwort und das voreingestellte Passwort übereinstimmen.

2. RFID-Etikett nach Anspruch 1, das ferner einen Sendesignalprozessor (140) umfasst, der ein Sendesignal zum Senden zum Leser erzeugt, wenn es in der zweiten, sicheren Betriebsart ist, wobei die Etikettensteuerung ein Passwortanforderungssignal (S830) erzeugt, das eine Passwortsendung anfordert, wenn das Sendeanforderungssignal empfangen wird, und den Sendesignalprozessor und den Antennenteil zum Senden des Passwortanforderungssignals zum Leser steuert.

3. RFID-Etikett nach Anspruch 2, wobei die Etikettensteuerung (120) den Sendesignalprozessor und den Antennenteil zum Neusenden des Passwortanforderungssignals zum Leser steuert, wenn das vom Leser gesendete Passwort und das voreingestellte Passwort nicht übereinstimmen.

4. RFID-Etikett nach Anspruch 1, wobei die Etikettensteuerung (120) ein Alarmsignal erzeugt, das über einen Etikettendaten-Leseversuch informiert und den Sendesignalprozessor und den Antennenteil zum Emittieren des Alarmsignals steuert, wenn das vom Leser gesendete Passwort und das voreingestellte Passwort eine bestimmte Anzahl von Malen nicht übereinstimmen.

5. RFID-Etikett nach Anspruch 1, das ferner einen Ausgabeteil umfasst, der eine Nachricht ausgibt, wobei die Etikettensteuerung den Ausgabeteil zum Ausgeben einer Alarmnachricht steuert, wenn das vom Leser gesendete Passwort und das voreingestellte Passwort eine bestimmte Anzahl von Malen nicht übereinstimmen.

6. RFID-Etikett nach Anspruch 1, wobei die Etikettensteuerung (120) einen Bereich des Speichers einstellt, wo die voreingestellten Passwortinformationen und Etikettendaten in einem Sperrzustand gespeichert sind.

7. RFID-Etikett nach Anspruch 6, wobei der Etikettenspeicher (130) eine erste Passwortinformation speichert, die ein Etikettendatenleserecht authentifiziert, und eine zweite Passwortinformation, die das Etikettendatenleserecht und ein Sperrzustandseinstellungs-Änderungsrecht authentifiziert.

8. Leser zum Lesen eines RFID-Etiketts nach den Ansprüchen 1 - 7, der Folgendes umfasst:
einen Eingabeteil (230), der einen Lesebefehl für ein Etikett empfängt;
einen Kommunikator (210), der mit dem Etikett (100) kommuniziert; und
eine Steuerung (220), die den Kommunikator zum Senden eines Sendeanforderungssignals (S810) für in dem Etikett gespeicherte Etikettendaten steuert, **dadurch gekennzeichnet, dass** der Leser in zwei Betriebsarten arbeiten kann:
einer ersten, allgemeinen Betriebsart, in der das Etikett als Reaktion auf das Sendeanforderungssignal (S810) Etikettendaten zum Leser sendet; und
einer zweiten, sicheren Betriebsart, in der das Etikett als Reaktion auf das Sendeanforderungssignal (S810) eine Passwortsendung (S830) zum Leser anfordert, wobei die Steuerung so ausgelegt ist, dass sie die Passwortinformation (S840) zu dem Etikett als Reaktion auf die Anforderung sendet, um das Lesen der Etikettendaten von dem Etikett zu ermöglichen.

9. Leser nach Anspruch 8, wobei die Steuerung (220) eine Passworteingabe durch den Eingabeteil und ein voreingestelltes Passwort zum Etikett (100) sendet.

10. Leser nach Anspruch 8, der ferner ein Passwortregister (240) umfasst, das ein Passwortregistrierungs-Anforderungssignal erzeugt, das Informationen über das zu registrierende Passwort enthält, wenn ein Passwortregistrierungsbefehl und das zu registrierende Passwort über den Eingabeteil eingegeben werden.

11. Leser nach Anspruch 10, der ferner Folgendes umfasst:
einen Speicher (250), der Informationen über wenigstens ein Etikett speichert; und einen Anzeigeteil (260), der eine Liste des wenigstens einen Etiketts und ein Passworteingabefenster anzeigt, wenn der Passwortregistrierungsbefehl eingegeben wird, wobei das Passwortregister (240) das Passwortregistrierungs-Anforderungssignal erzeugt, das eine über das Passworteingabefenster eingegebene erste Passwortinformation enthält und das Passwortregistrierungs-Anforderungssignal zu einem ersten Etikett sendet, das aus der Liste ausgewählt ist.

12. RFID-Etikettenlesesystem, das Folgendes umfasst:
ein Etikett nach einem der Ansprüche 1 bis 7; und
einen Leser nach einem der Ansprüche 8 bis 11.

13. RFID-Etikettenlesesystem, das ein Etikett nach Anspruch 7 und einen Leser nach den Ansprüchen 8 bis 11 umfasst, wobei das Etikett eine Neusendung des zweiten Passwortes anfordert, wenn das erste Passwort und das zweite Passwort nicht übereinstimmen.

14. Etikettenleseverfahren in einem RFID-Etikettenlesesystem, das ein Etikett und einen Leser umfasst, wobei das Verfahren Folgendes beinhaltet:
a) der Leser sendet ein Etikettendatenanforderungssignal (S810) zum Etikett;
**dadurch gekennzeichnet, dass**:
b) das Etikett seine Betriebsart ermittelt, und wenn seine Betriebsart eine allgemeine Betriebsart ist, das Etikett die Etikettendaten (S860) zum Leser sendet, oder, wenn die Betriebsart eine sichere Betriebsart ist, das Etikett eine Passwortsendeanforderung (S830) zum Leser erzeugt;
c) der Leser als Reaktion auf eine Passwortsendeanforderung ein Passwort (S840) zum Etikett sendet; und
d) das Etikett ein voreingestelltes Passwort und das vom Leser gesendete Passwort vergleicht und die Etikettendaten (S860) zum Leser sendet, wenn die beiden Passwörter übereinstimmen.

15. Verfahren nach Anspruch 14, wobei, wenn das voreingestellte Passwort und das vom Leser gesendete Passwort nicht übereinstimmen, das Etikett die Anzahl von Nichtübereinstimmungen der beiden Passwörter zählt; und das Etikett eine Alarmnachricht ausgibt, die über ein unmögliches Senden der Etikettendaten informiert, wenn die gezählte Anzahl von Nichtübereinstimmungen über einer bestimmten Anzahl von Malen liegt.

16. Verfahren nach Anspruch 14 oder 15, das ferner Folgendes beinhaltet:
das Etikett erzeugt ein Alarmsignal, das über einen Etikettendaten-Leseversuch informiert, wenn das voreingestellte Passwort und das vom Leser gesendete Passwort nicht übereinstimmen; und das Etikett das Alarmsignal emittiert.

17. Verfahren nach Anspruch 14 oder 15, das ferner Folgendes beinhaltet:
der Leser empfängt ein zu registrierendes Passwort, wenn ein Passwortregistrierungsbefehl in den Leser eingegeben wird; und der Leser erzeugt ein Passwortregistrierungs-Anforderungssignal, das Informationen über das zu registrierende Passwort enthält, und registriert das Passwort durch Senden des Passwortregistrierungs-Anforderungssignals zu benachbarten Etiketten.

18. Verfahren nach Anspruch 17, das ferner Folgendes beinhaltet:
Anzeigen einer Liste von wenigstens einem Etikett zum Registrieren eines Passwortes; und
Registrieren des Passwortes durch Senden eines das zu registrierende Passwort enthaltenden Passwortregistrierungs-Anforderungssignals zu einem gewählten Etikett, wenn ein Etikett aus der Liste ausgewählt wird.

## Revendications

1. Etiquette RFID, comprenant :
une mémoire d'étiquette (130) qui mémorise des informations de mot de passe préétablies et des données d'étiquette ;
une partie d'antenne (110) qui reçoit un signal de requête d'émission des données d'étiquette depuis un lecteur externe (200) ; et
un contrôleur d'étiquette (120),
**caractérisée en ce que** l'étiquette est exploitable dans deux modes :
un premier mode général dans lequel l'étiquette transmet des données d'étiquette au lecteur si un signal de requête de transmission est reçu ; et
un second mode sécurisé dans lequel l'étiquette génère une requête de transmission de mot de passe au lecteur si un signal de requête de transmission est reçu, et transmet les données d'étiquette au lecteur si le mot de passe transmis par le lecteur et le mot de passe préétabli concordent.

2. Etiquette RFID selon la revendication 1, comprenant en outre un processeur de signaux de transmission (140) qui génère un signal de transmission à transmettre au lecteur quand il est dans le second mode sécurisé, le contrôleur d'étiquette générant un signal de requête de mot de passe (S830) qui requiert la transmission du mot de passe si le signal de requête de transmission est reçu, et commande au processeur de signal de transmission et à la partie d'antenne de transmettre le signal de requête de mot de passe au lecteur.

3. Etiquette RFID selon la revendication 2, dans laquelle le contrôleur d'étiquette (120) commande au processeur de signal de transmission et à la partie d'antenne de retransmettre le signal de requête de mot de passe au lecteur si le mot de passe transmis par le lecteur et le mot de passe préétabli ne concordent pas.

4. Etiquette RFID selon la revendication 1, dans laquelle le contrôleur d'étiquette (120) génère un signal d'alarme qui informe de la tentative de lecture des données d'étiquette et commande au processeur de signal de transmission et à la partie d'antenne d'émettre le signal d'alarme, si le mot de passe transmis par le lecteur et le mot de passe préétabli ne concordent pas un certain nombre de fois.

5. Etiquette RFID selon la revendication 1, comprenant en outre une partie de sortie qui produit en sortie en message, le contrôleur d'étiquette commandant à la partie de sortie de produire en sortie un message d'alarme si le mot de passe transmis par le lecteur et le mot de passe préétabli ne concordent pas le certain nombre de fois.

6. Etiquette RFID selon la revendication 1, dans laquelle le contrôleur d'étiquette (120) règle une zone de la mémoire où les informations de mot de passe préétabli et les données d'étiquette sont stockées dans un état verrouillé.

7. Etiquette RFID selon la revendication 6, dans laquelle la mémoire d'étiquette (130) stocke une première information de mot de passe qui authentifie un droit de lecture de données d'étiquette, et une seconde informations de mot de passe qui authentifie le droit de lecture de données d'étiquette et un droit de changement de réglage de l'état de verrouillage.

8. Lecteur qui lit une étiquette RFID selon les revendications 1 à 7, comprenant :
une partie d'entrée (230) qui reçoit une commande de lecture d'étiquette ;
un dispositif de communication (210) qui communique avec l'étiquette (100) ; et
un contrôleur (220) qui commande au dispositif de communication de transmettre un signal de requête de transmission (S810) pour les données d'étiquette stockées dans l'étiquette, **caractérisé en ce que**
le lecteur est exploitable dans deux modes ;
un premier mode général dans lequel l'étiquette transmet des données d'étiquette au lecteur en réponse au signal de requête de transmission (S810) ; et
un second mode sécurisé dans lequel l'étiquette requiert du lecteur une transmission de mot de passe (S830) en réponse au signal de requête de transmission (S810), le contrôleur étant adapté pout transmettre les informations de mot de passe (S840) à l'étiquette en réponse à la requête, pour permettre la lecture des données d'étiquette de l'étiquette.

9. Lecteur selon la revendication 8, dans lequel le contrôleur (220) transmet l'un d'une entrée de mot de passe par le biais de la partie d'entrée et d'un mot de passe préétabli à l'étiquette (100).

10. Lecteur selon la revendication 8, comprenant en outre un registre de mot de passe (240) qui génère un signal de requête d'enregistrement de mot de passe contenant des informations sur le mot de passe à enregistrer, si une commande d'enregistrement de mot de passe et le mot de passe à enregistrer sont entrés par le biais de la partie d'entrée.

11. Lecteur selon la revendication 10, comprenant en outre
une mémoire (250) qui mémorise des informations d'au moins une étiquette ; et une partie d'affichage (260) qui affiche une liste de l'au moins une étiquette et d'une fenêtre d'entrée de mot de passe, si la commande d'enregistrement de mot de passe est entrée, dans lequel le registre de mot de passe (240) génère le signal de requête d'enregistrement de mot de passe contenant une première information de mot de passe qui est entrée par le biais de la fenêtre d'entrée de mot de passe, et transmet le signal de requête d'enregistrement de mot de passe à une première étiquette qui est sélectionnée dans la liste.

12. Système de lecture d'étiquette RFID, comprenant :
une étiquette selon l'une quelconque des revendications 1 à 7 ; et
un lecteur selon l'une quelconque des revendications 8 à 11.

13. Système de lecture d'étiquette RFID comprenant une étiquette selon la revendication 7 et un lecteur selon les revendications 8 à 11, dans lequel l'étiquette requiert la retransmission du second mot de passe, si le premier mot de passe et le second mot de passe ne concordent pas.

14. Procédé de lecture d'étiquette dans un système de lecture d'étiquette RFID comprenant une étiquette et un lecteur, le procédé comprenant :
a) la transmission par le lecteur d'un signal de requête de données d'étiquette (S810) à l'étiquette ; **caractérisé en ce que**
b) l'étiquette détermine son mode de fonctionnement, et si son mode de fonctionnement est un mode de fonctionnement général, l'étiquette transmet les données d'étiquette (S860) au lecteur, ou si son mode de fonctionnement est un mode de fonctionnement sécurisé, l'étiquette génère une requête de transmission de mot de passe (S830) au lecteur ;
c) le lecteur transmet un mot de passe (S840) à l'étiquette en réponse à une requête de transmission de mot de passe ; et
d) l'étiquette compare un mot de passe préétabli et le mot de passe transmis par le lecteur, et transmet les données d'étiquette (S860) au lecteur si les deux mots de passe concordent.

15. Procédé selon la revendication 14, dans lequel si le mot de passe préétabli et le mot de passe transmis par le lecteur ne concordent pas, l'étiquette compte le nombre de non-concordances des deux mots de passe ; et l'étiquette produit en sortie un message d'alarme informant une transmission impossible des données d'étiquette, si le nombre compté de non-concordances dépasse un certain nombre de fois.

16. Procédé selon la revendication 14 ou 15, comprenant en outre :
la génération par l'étiquette d'un signal d'alarme, informant une tentative de lecture des données d'étiquette, si le mot de passe préétabli et le mot de passe transmis par le lecteur ne concordent pas ; et l'étiquette émet le signal d'alarme.

17. Procédé selon la revendication 14 ou 15, comprenant en outre :
la réception par le lecteur d'un mot de passe à enregistrer, si une commande d'enregistrement de mot de passe est entrée dans le lecteur ; et le lecteur génère un signal de requête d'enregistrement de mot de passe contenant des informations sur le mot de passe à enregistrer, et enregistre le mot de passe en transmettant le signal de requête d'enregistrement de mot de passe aux étiquettes voisines.

18. Procédé selon la revendication 17, comprenant en outre
l'affichage d'une liste d'au moins une étiquette pour enregistrer un mot de passe ; et
l'enregistrement du mot de passe en transmettant un signal de requête d'enregistrement de mot de passe contenant le mot de passe à enregistrer à une étiquette sélectionnée, si une étiquette est sélectionnée dans la liste.
